(19) **Europäisches Patentamt**
**European Patent Office**
**Office européen des brevets**

(11) Veröffentlichungsnummer: **0 092 776**
**B1**

(12) **EUROPÄISCHE PATENTSCHRIFT**

(45) Veröffentlichungstag der Patentschrift:
14.01.87

(21) Anmeldenummer: 83103797.3

(22) Anmeldetag: 20.04.83

┌─────────────┐
│ E R R A T U M │
└─────────────┘

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT:
SHOULD READ :
DEVRAIT ETRE LU :

| DIE TEXTSTELLE | Seite | Zeile | LAUTET BERICHTIGT |
|---|---|---|---|
| Spuren von Bauerstoffsäuren | 2 | 16 | Spuren von Sauerstoffsäuren |
| wie Polycaprolactam (PA 8) oder Polyhexamethylendiamin-adipat (PA 86) | | 32 | wie Polycaprolactam (PA 6) oder Polyhexamethylendiamin-adipat (PA 66) |
| Als Polyolefin: homo- oder | | 47 | Als Polyolefinhomo- oder |
| des nach la hergestellen | 3 | 17 | des nach 1a hergestellten |
| 59 Teile Polyamid 66,5 Teile roter Phosphor | | 49 | 59 Teile Polyamid 66, 5 Teile roter Phosphor |
| in einem Polyolefinhomooder | 4 | 30 | in einem Polyolefinhomo- oder |
| mit dem rot en Phosphor | | 35 | mit dem roten Phosphor |

| | | |
|---|---|---|
| Tag der Entscheidung über die Berichtigung ) Date of decision on rectification: ) 18.03.87 Date de décision portant ) sur modification: ) | Ausgabe- und Ver-öffentlichungstag: ) Issue and publication ) date: ) 20.05.87 Date d'edition et de ) publication: ) | Patbl.Nr) EPB no:) 87/21 Bull. no:) |

**Europäisches Patentamt**

**European Patent Office**

**Office européen des brevets**

(19)

(11) Veröffentlichungsnummer: **0 092 776**
**B1**

(12)   # EUROPÄISCHE PATENTSCHRIFT

(45) Veröffentlichungstag der Patentschrift:
**14.01.87**

(21) Anmeldenummer: **83103797.3**

(22) Anmeldetag: **20.04.83**

(51) Int. Cl.⁴: **C 08 J 3/22,** C 08 K 3/02,
C 08 K 3/10, C 08 K 3/22,
C 08 K 3/26, C 08 K 5/09,
C 08 L 77/00, C 08 L 67/00,
C 08 L 71/04, C 08 L 25/04,
C 08 L 23/00

(54)   **Verfahren zum Flammfestausrüsten von Polyamiden.**

(30) Priorität: **28.04.82 DE 3215751**

(43) Veröffentlichungstag der Anmeldung:
**02.11.83 Patentblatt 83/44**

(45) Bekanntmachung des Hinweises auf die Patenterteilung:
**14.01.87 Patentblatt 87/3**

(84) Benannte Vertragsstaaten:
**CH DE FR GB IT LI NL**

(56) Entgegenhaltungen:
**AT-B-355 313**
**DE-A-2 745 076**
**DE-A-2 754 515**
**DE-A-2 827 760**

(73) Patentinhaber: **BASF Aktiengesellschaft, Carl-Bosch- Strasse 38, D-6700 Ludwigshafen (DE)**

(72) Erfinder: **Theysohn, Rainer, Dr., Am Bruch 38, D-6710 Frankenthal (DE)**
Erfinder: **Zahradnik, Franz, Dr., Schwedlerstrasse 120, D-6700 Ludwigshafen (DE)**
Erfinder: **Gutsche, Herbert, Koenigsberger Strasse 4, D-6711 Beindersheim (DE)**
Erfinder: **Weiss, Hans- Peter, Dr., Pfalzring 75, D-6704 Mutterstadt (DE)**

EP 0 092 776 B1

0 092 776

**Beschreibung**

Die Erfindung betrifft ein Verfahren zum Flammfestausrüsten von Polyamiden, wobei man 1 - 10 Gew.% roten Phosphor und 0,005 bis 8 Gew.% einer anorganischen oder organischen Verbindung eines zwei- oder vierwertigen Metalls als Stabilisator für den Phosphor in das Polyamid einarbeitet.

Es ist bekannt, daß roter Phosphor ein wirksames Flammschutzmittel für thermoplastische Kunststoffe ist. Phosphor neigt jedoch unter ungünstigen Bedingungen, wie z.B. erhöhte Temperatur, Gegenwart von Feuchtigkeit oder Luft, zur Disproportionierung unter Bildung von Phosphorwasserstoff und Sauerstoffsäuren des Phosphors.

Es hat deshalb nicht an Versuchen gefehlt, die Stabilität des als Flammschutzmittel für Kunststoffe eingesetzten Phosphors zu verbessern. So kann eine gewisse stabilisierende Wirkung durch Zugabe von Verbindungen des Zinks, Magnesiums oder Aluminiums erreicht werden. In der DE-B 27 45 076 wird Cadmiumoxid als Stabilisator für roten Phosphor empfohlen, der als Flammschutzmittel für Polyamidformmassen eingesetzt werden soll. Die Stabilität des Phosphors ist jedoch in vielen Fällen immer noch ungenügend. So bilden sich bei längerer Lagerung in Kunststoff-Formteilen, die stabilisierten roten Phosphor als Flammschutzmittel enthalten, Spuren von Bauerstoffsäuren des Phosphors, die vor allem dann störend wirken, wenn das Formteil auf dem Elektrosektor eingesetzt wird. Die DE-A 27 54 515 betrifft ein Mittel zum Flammfestausrüsten von Kunststoffen in Form eines Pulvers oder Granulats, das aus 50 - 95 Gew.% rotem Phosphor mit einer mittleren Korngröße unter 200 µm und 5 - 50 Gew.% eines gesättigten Polyesters mit einem Schmelzpunkt von 50 - 90°C und einem mittleren Molekulargewicht unter 10 000 besteht.

Es wird also ein Konzentrat aus rotem Phosphor und Polyester, welches gegebenenfalls noch Metalloxide enthalten kann, in thermoplastische Kunststoffe eingebracht. Die Verwendung von Konzentraten mit so hohem Phosphorgehalt ist technisch aufwendig und nicht ungefährlich. Der Erfindung lag daher die Aufgabe zugrunde, die Stabilität des Phosphors noch weiter zu erhöhen.

Es wurde nun gefunden, daß diese Aufgabe durch ein Verfahren zum Flammfestausrüsten von Polyamiden, wobei man 1 bis 10 Gew.% roten Phosphor und 0,005 bis 8 Gew.% einer anorganischen oder organischen Verbindung eines zwei- oder vierwertigen Metalls als Stabilisator für den roten Phosphor in das Polyamid einarbeitet, gelöst wird, das dadurch gekennzeichnet ist, daß man den Stabilisator in das Polyamid als 10 bis 90 gew.%iges Konzentrat in einem-Polyolefinhomo- oder -copolymeren einarbeitet, dessen Schmelzpunkt mindestens 30°C unterhalb des Schmelzpunktes des Polyamids liegt.

Als Polyamide die erfindungsgemäß flammfest ausgerüstet werden können, kommen grundsätzlich alle Polyamide in Frage, wie Polycaprolactam (PA 8) oder Polyhexamethylendiaminadipat (PA 86).

Dem Polyamid werden als Flammschutzmittel 1 bis 10, vorzugsweise 2 bis 8 Gew.% Phosphor als Flammschutzmittel zugesetzt. Es wird ein handelsüblicher roter Phosphor verwendet, der vorstabilisiert und/oder phlegmatisiert und/oder gecoatet sein kann.' Die mittlere Größe der Phosphorpartikel liegt vorzugsweise zwischen 0,001 und 0,2 mm. Es kann zweckmäßig sein, den Phosphor in einem Trägerharz einzubetten. Geeignete Trägerharze sind z.B. Phenol/Formaldehyd-Novolake, Cyclohexanonharze, Phenol/Isobutyraldehyd-Harze, Epoxidharze, ferner niedermolekulare Polyamide und Polyester, sowie Styrol-Oligomere.

Die Stabilisatoren werden dem Polyamid in Mengen von 0,005 bis 8, vorzugsweise von 0,05 bis 3 Gew.% zugesetzt. Das Gewichtsverhältnis Phosphor zu Stabilisator sollte zwischen 100:1 und 1:1 liegen. Bevorzugt ist der Stabilisator eine Verbindung des Cadmiums, Zinks, Aluminiums oder Zinns. Es kommen aber auch Verbindungen von Magnesium, Mangan und Titan in Frage. Geeignete Verbindungen sind z.B. die Oxide von Cadmium, Zink, Aluminium, Titan oder Magnesium, ferner Carbonate oder Oxicarbonate, sowie Salze organischer Säuren.

Die Stabilisatoren werden erfindungsgemäß als 10 bis 90, vorzugsweise 20 bis 70 gew.%iges Konzentrat in einem Polyolefinhomo- oder -copolymerisat eingesetzt. Als Polyolefin: homo- oder -copolymere kommen z.B. in Frage:

Polyolefine, wie z.B. Homopolymere des Ethylens oder Propylens und deren Copolymere, z.B. miteinander oder mit Acrylsäure und/oder Acrylaten.

Es ist überraschend, daß die Wirksamkeit der Stabilisatoren erhöht wird, wenn man sie als Konzentrat in einem Kunststoff zusetzt, insbesondere dann, wenn das Polyolefinhomo- oder -copolymere mit dem Polyamid nicht molekular mischbar ist.

Neben Phosphor, Metallverbindung und gegebenenfalls Trägerharz kann das Polyamid noch die üblichen Zusatzstoffe, wie Verstärkungsmittel, Füllstoffe, Pigmente, Keimbildner, Stabilisatoren, Fließ- und Entformungshilfsmittel enthalten. Besonders bevorzugt ist der Zusatz von 10 bis 50 Gew.% Glasfasern, Glaskugeln, Talkum, calciniertem Kaolin, Kreide, Glimmer oder Wollastonit.

Das Einarbeiten der Zusätze geschieht auf üblichen Mischaggregaten, z.B. auf einem Extruder. Man kann die Zusätze trocken vormischen oder auch getrennt voneinander zugeben. Sie können sowohl mit Kunststoffgranulat vermischt und dann aufgeschmolzen als auch direkt zu einer Schmelze des Polyamids zugesetzt werden. Eine bevorzugte Ausführungsform der Erfindung besteht darin, daß ein Teil des Stabilisatorkonzentrats zusammen mit dem roten Phosphor dem in fester Form vorliegenden Polyamid zugesetzt wird, z.B. am Einzugsteil eines Extruders. und der restliche Teil an einer Stelle in das Polyamid eingemischt wird, an der dieser bereits aufgeschmolzen ist. Die Kunststoffbasis der Stabilisatorkonzentrate kann dabei auch verschieden sein.

2

In einer anderen Ausführungsform der Erfindung werden Stabilisatorkonzentrat, Phosphor und gegebenenfalls Trägerharz für den Phosphor getrennt voneinander oder in trocken vorgemischter Form in den Extruder an einer Stelle zugegeben, an der das Polyamid noch nicht aufgeschmolzen ist, und der Extruder wird dann in seinem Einzugsteil auf eine Temperatur beheizt, die oberhalb des Schmelzpunktes des Polyolefinhomo- oder -copolymeren und gegebenenfalls des Trägerharzes, aber unterhalb des Schmelzpunktes des Polyamids liegt.

Die in den Beispielen genannten Teile und Prozente beziehen sich auf das Gewicht.

**Beispiel 1**

a. Polyethylen niedriger Dichte mit einem Schmelzindex von 10 (bei 190°C, Belastung 2,16 kg) wurde auf einem Walzstuhl bei 140°C aufgeschmolzen, in die Schmelze wurde die gleiche Menge pulverförmiges Zinkhydroxicarbonat zugegeben und homogen verteilt. Die Mischung wurde abgekühlt und zerkleinert.

b. Auf einem Zweiwellenextruder (ZSK der Fa. Werner und Pfleiderer wurden im Einzugsteil 58 Teile Polyamid-6.6 (K-Wert 70), 5 Teile roter Phosphor und 2 Teile des nach 1a hergestellten Konzentrats zugesetzt. Durch einen Einfüllstutzen wurden in die Schmelze 35 Teile Glasfasern mit einer Schnittlänge von 3 mm und einem Durchmesser von 10μ zugegeben. Die schmelzflüssige Mischung wurde in Strängen ausgetragen, abgekühlt, granuliert und getrocknet. Aus dem Granulat wurden bei 280°C Normkleinstäbe nach DIN 53 453 spritzgegossen. Je 50 dieser Normkleinstäbe wurden in einem offenen Gefäß 200 Tage bei 60°C in 100 ml Wasser gelagert, wobei die Wassermenge konstant gehalten wurde. Im Abstand von 50 Tagen wurden aus der wäßrigen Phase Probemengen entnommen, in denen die Gesamtmenge an gelösten Phosphorverbindungen gemessen wurde.

Ergebnisse siehe Tabelle

c. Vergleichsversuch

Es wurde wie unter 1b beschrieben gearbeitet, wobei aber statt des Konzentrats 1 Teil Zinkhydroxicarbonat zugesetzt wurde.

**Beispiel 2**

a. Polyamid 69 mit einem K-Wert von 72 und einem Schmelzpunkt von 215°C wurden in einem Einwellenextruder mit der gleichen Menge Cadmiumoxid vermischt.

b. Wie in Beispiel 1b beschrieben, wurden 59 Teile Polyamid 66 (K-Wert 72, Schmelzpunkt 260°C), 5 Teile roter Phosphor und 1 Teil Konzentrat 2a in den Einzugsteil eines Extruders eingegeben, schmelzgemischt und der Schmelze 35 Teile Glasfasern zugesetzt.

c. Vergleichsversuch

Es wurde wie bei 2b gearbeitet, wobei aber statt des Konzentrats 0,5 Teile Cadmiumoxid zugegeben wurden.

**Beispiel 3**

a. Polyethylen niedriger Dichte (melt-index 20 bis 190°C und 2,16 kg Belastung, Schmelzbereich 105 bis 110°C) wurde auf einem Walzstuhl bei 140°C aufgeschmolzen und mit der gleichen Menge Cadmiumoxid homogen vermischt.

b. Wie in Beispiel 1b beschrieben, wurden 59 Teile Polyamid 66,5 Teile roter Phosphor und 0,5 Teile Konzentrat 2a in den Einzugsteil eines Extruders zugegeben und in der Schmelze homogenisiert. Dieser Schmelze wurden dann 0,5 Teile Konzentrat 3a und 35 Teile Glasfasern zugesetzt.

**Tabelle**

| Beispiel | Kunststoff | ppm Gesamtphosphor nach Lagerung | | |
|---|---|---|---|---|
| | | 50 d | 100 d | 200 d |
| 1b | PA 66 | 33 | 51 | 91 |
| 1c | " | 57 | 99 | 152 |
| 2b | PA 66 | 5 | 25 | 75 |
| 2c | " | 8 | 45 | 123 |
| 3b | " | 7 | 12 | 30 |

**Patentansprüche**

1. Verfahren zum Flammfestausrüsten von Polyamiden, wobei man 1 bis 10 Gew. % roten Phosphor und 0,005 bis 8 Gew.% einer anorganischen oder organischen Verbindung eines zwei- oder vierwertigen Metalls als Stabilisator für den Phosphor in das Polyamid einarbeitet, dadurch gekennzeichnet, daß der Stabilisator als 10 bis 90 gew.%iges Konzentrat in einem Polyolefinhomooder -copolymerisat eingesetzt wird, dessen Schmelzpunkt mindestens 30° C unterhalb dem Schmelzpunkt des Polyamids liegt.

2. Verfahren nach Anspruch 1, dadurch gekennzeichnet, daß der Stabilisator eine Verbindung von Cadmium, Zink. Aluminium oder Zinn ist.

3. Verfahren nach Anspruch 1, dadurch gekennzeichnet, daß ein Teil des Stabilisatorkonzentrats zusammen mit dem rot en Phosphor, dem in fester Form vorliegenden Polyamid zugesetzt wird und der restliche Teil des Stabilisatorkonzentrats in das aufgeschmolzene Polyamid eingemischt wird.

**Claims**

1. A process for flameproofing polyamides, from 1 to 10% by weight of red phosphorus and from 0.005 to 8% by weight of an inorganic or organic compound of a divalent or tetravalent metal, as stabilizer for the phosphorus, being incorporated into the polyamide, wherein the stabilizer is used in the form of a 10 to 90% strength by weight concentrate in a polyolefin homopolymer or copolymer whose melting point is at least 30° C below the melting point of the polyamide.

2. A process as claimed in claim 1, wherein the stabilizer is a cadmium, zinc, aluminium or tin compound.

3. A process as claimed in claim 1, wherein part of the stabilizer concentrate, together with the red phosphorus, is added to the polyamide which is present in solid form, and the rest of the stabilizer concentrate is mixed into the molten polyamide.

**Revendications**

1. Procédé pour ignifuger des polyamides, 1 à 10 % en poids de phosphore rouge et 0,005 à g % en poids d'un composé organique ou inorganique d'un métal bi- ou quadrivalent étant introduits dans le polyamide comme stabilisant pour le phosphore, caractérisé par le fait que le stabilisant est mis en oeuvre sous forme d'un concentré à 10 a 90 % en poids dans un homo- ou copolymérisat de polyoléfine, dont le point de fusion est d'au moins 30° C au dessous du point de fusion du polyamide.

2. Procédé selon la revendication 1, caractérisé par le fait que le stabilisant est un composé de cadmium, zinc, aluminium ou étain.

3. Procédé selon la revendication 1, caractérisé par le fait qu'une partie du concentré de stabilisant est ajoutée au polyamide, alors sous forme solide, en même temps que le phosphore rouge, et le reste de concentré de stabilisant est introduit en mélange dans le polyamide fondu.